# EUROPEAN PATENT APPLICATION

(11) **EP 2 362 468 A1**
(43) Date of publication of application: **31.08.2011**
(21) Application number: 09829203.0
(22) Date of filing: 26.11.2009
(51) Int. Cl.: H01M 4/62, H01M 2/02, H01M 4/02, H01M 4/04, H01M 4/13, H01M 4/139, H01M 6/02, H01M 10/04, H01G 9/00, H01G 9/058, H01G 9/22, H01M 10/0585, H01M 10/0587

(54) **ELECTRODE FILM, ELECTRODE, METHOD FOR MANUFACTURING THE ELECTRODE, AND ELECTRICAL STORAGE DEVICE**

(30) Priority: 28.11.2008 JP 2008303863
(71) Applicant: Sumitomo Chemical Company, Limited, Tokyo 104-8260 (JP)
(72) Inventor: EGUCHI, Hironori, Ichihara-shi Chiba 299-0125 (JP)
(74) Representative: Vossius & Partner
(86) International application number: PCT/JP2009/070276
(87) International publication number: WO 2010/061965

(57) **Abstract**

Provided is an electrode film comprising an active material having an average particle diameter being equal to or more than 2 µm and equal to or less than 50 µm and inorganic particles containing a conductive ion and having an average diameter being equal to or more than 1 nm and less than 2 µm, wherein the active material is bound by the inorganic particles, and an electrode in which the electrode film is stacked on a current collector is also provided. In addition, an electric storage device, comprising the above-mentioned electrode, in which two electrodes are arranged so that their electrode films may be opposed to each other, the electrode films are wound or stacked with a separator interposed between the electrode films, and the electrodes and the separator are enclosed together with an electrolyte solution in a metal container is provided.

## Description

### TECHNICAL FIELD

The present invention relates to an electrode film, an electrode, and a method for producing the same. The present invention relates also to an electric storage device comprising the above-mentioned electrode. The electrode film in the present invention is a component that constitutes an electrode together with a current collector and serves as a portion that substantially stores electricity in an electrode.

### BACKGROUND ART

An electrode comprising a metal foil which is a current collector and an active material which is bound by a binder is known as an electrode for use in electric storage devices, such as a primary battery, a secondary battery, and a hybrid capacitor. Fluororesin has heretofore been used as a binder and polytetrafluoroethylene (hereinafter referred to as PTFE) and polyvinylidene fluoride (hereinafter referred to as PVDF) which are superior in heat resistance, chemical resistance, and electrochemical stability, have been used suitably.

For example, an electrode obtained by pressuring a mixture containing polyfluoroethylene and an active material to a metal screen is disclosed in JP 6-103979A.

In recent years, highly conductive electrodes have been required. The electrode containing fluororesin as a binder as described above is still insufficient in terms of conductivity.

### DISCLOSURE OF THE INVENTION

An object of the present invention is to provide a highly conductive electrode film, and an electrode and an electric storage device both including that film.

In one aspect, the present invention relates to an electrode film comprising an active material having an average particle diameter being equal to or more than 2 µm and equal to or less than 50 µm and inorganic particles containing a conductive ion and having an average diameter being equal to or more than 1 nm and less than 2 µm, wherein the active material is bound by the inorganic particles.

In another aspect, the present invention relates to an electrode in which the electrode film has been laminated on a current collector.

In still another aspect, the present invention relates to a method for producing the aforementioned electrode, wherein the method comprises: applying a dispersion liquid comprising an active material and inorganic particles containing a conductive ion dispersed in a liquid medium to a current collector to form a dispersion liquid film, and removing the liquid medium from the dispersion liquid film to form an electrode film.

In still another aspect, the present invention relates to an electric storage device, comprising the aforementioned electrode, in which two electrodes are arranged so that electrode films thereof may be opposed to each other, both the electrode films are wound or stacked with a separator interposed between the electrode films, and the electrodes and separator are enclosed together with an electrolyte solution in a metal container.

### MODE FOR CARRYING OUT THE INVENTION

The electrode film of the present invention comprises an active material and inorganic particles containing a conductive ion.

In the present invention, an active material refers to any substance which emits or incorporates electrons through a chemical reaction with an electrolyte. Generally, a substance which emits electrons during discharge is called a negative electrode active material, and an active material which incorporates an electron during discharge is called a positive electrode active material

In the present invention, examples of the positive electrode active material include conductive ion-containing oxides and conductive ion-containing chalcogenides of transition metal elements such as titanium (Ti), Vanadium (V), chromium (Cr), manganese (Mn), iron (Fe) cobalt (Co), nickel (Ni), copper (Cu), niobium (Nb), and molybdenum (Mo); and examples of the positive electrode active material for a lithium ion secondary battery include a cobalt/lithium mixed oxides and lithium mixed oxides containing aluminum (Al) or a transition metal element other than nickel, as well as nickel because of their high average discharge potential.

Examples of the negative electrode active material include light metals, light metal alloys, carbonaceous substances, inorganic oxides, inorganic chalcogenides, metal complexes, and organic macromolecular compounds, and carbonaceous substances are preferred. A carbonaceous substance is a substance which contains carbon as a constituent. Examples of the carbonaceous substance include graphite-based materials, such as natural graphite, artificial graphite, graphitized mesocarbon microbeads, graphite whisker, graphitized carbon fiber, and vapor phase-grown carbon fiber; graphitizable carbonaceous materials obtained by heat-treating dry distillation fuels, such as coal coke, petroleum coke, and pitch coke; calcined products of furfuryl alcohol resin, calcined products of novolac resin, calcined products of phenol resin, calcined products of polyacrylonitrile resin, calcined products of rayon; activated carbon; carbon black, such as acetylene black and Ketchen black; glassy carbon, carbon nanotube, and carbon nanosphere, and activated carbon is preferred. The activated carbon is produced by carbonizing or activating a carbon source of derived from vegetable, such as sawdust and coconut shell, or a carbon source derived from coal/petroleum, such as coke and pitch, or a synthetic macromolecular carbon source, such as a phenol resin, a furfuryl alcohol resin, and a vinyl chloride resin. These may be used singly or in combination, and examples of combinations being applicable to the present invention include a combination of a light metal and a carbonaceous substance, a combination of a light metal and an inorganic oxide, and a combination of a light metal, a carbonaceous substance and an inorganic oxide.

In the present invention, the average particle diameter of the active material is equal to or more than 2 µm and equal to or less than 50 µm. From the viewpoint of the strength and the stability of a film, the average particle diameter of the active material is preferably within the range of from 2 µm to 30 µm. The average particle diameter of the active material is an average particle diameter measured by a laser diffraction/scattering type particle size distribution analyzer. The active material having such an average particle diameter can be obtained by pulverizing a commercial active material by a pulverizer, such as a ball mill. In the case of doing pulverization by using a ball mill, it is preferable that the balls and the pulverizing container be made of a nonmetal, such as alumina, agate, and zirconia, in order to avoid the contamination of a metal powder.

An inorganic particle containing a conductive ion is an inorganic particle that contains a conductive ion and is capable of emitting the conductive ion through a chemical reaction of itself, for example, a reaction with an electrolyte.

The conductive ion referred to herein means an ion emitted simultaneously when an electron is emitted through a chemical reaction of the inorganic particle containing a conductive ion, for example, a reaction with an electrolyte. For example, a lithium ion is a conductive ion in a lithium ion secondary battery, and a sodium ion is a conductive ion in a sodium ion secondary battery. Other examples of the conductive ion include alkali metal ions, such as a potassium ion and a cesium ion, alkaline earth metal ions, such as a calcium ion, a magnesium ion and a barium ion, an aluminum ion, a silver ion, and a zinc ion. Alkali metal ion and alkaline earth metal ions are preferable, and a lithium ion and a sodium ion are particularly preferable.

In the electrode film of the present invention, the inorganic particles containing a conductive ion serve as a binder which binds active materials together. When the electrode film of the present invention constitutes an electrode in combination with a current collector, the inorganic particles containing a conductive ion function also as a binder which binds the electrode film to the current collector. From the viewpoint of binding force to an active material and the heat resistance of the electrode film, silicates, such as sodium silicate and lithium silicate, aluminates, such as sodium aluminate and lithium aluminate, titanates, such as sodium titanate and lithium titanate, zirconates, such as sodium zirconate and lithium zirconate, zincates, such as sodium zincate and lithium zincate, are preferred and, in particular, a silicate is suitably used.

In the present invention, the average particle diameter of the inorganic particles containing a conductive ion is equal to or more than 1 nm and less than 2 µm. From the viewpoint of binding force to an active material, the average particle diameter of the inorganic particles containing a conductive ion in the present invention is preferably within the range of 1 nm to 100 nm, and more preferably within the range of 1 nm to 50 nm. The average particle diameter of the inorganic particles containing a conductive ion preferably is equal to or less than the thickness of the electrode film, and from the viewpoint of binding force to the active material, it more preferably is equal to or less than the average particle diameter of the active material, and still more preferably is equal to or less than one tenth of the average particle diameter of the active material. In the present invention, the average particle diameter of the inorganic particles containing a conductive ion is an average particle diameter measured by a laser diffraction/scattering type particle size distribution analyzer.

It is preferable, from the viewpoint of the strength and the stability of the film, that the content of the inorganic particles containing a conductive ion in the electrode film of the present invention be within the range of 1 to 100 parts by weight relative to 100 parts by weight of the active material, and particularly from the viewpoint of electrostatic capacity, it is more preferably within the range of 1 to 50 parts by weight, even more preferably within the range of 1 to 35 parts by weight, and most preferably within the range of 1 to 25 parts by weight.

The composition of the inorganic particles containing a conductive ion in the present invention may be an active material. In other words, the electrode film in the present invention is just required to include at least two kinds of active materials differing in average particle diameter, wherein the particles which are the smallest in average particle diameter among the active materials are the inorganic particles containing a conductive ion.

From the viewpoint of the conductivity of an electrode film, it is preferable to use together a conducting agent smaller in average particle diameter than the active material. Examples of the conducting agent include acetylene black, carbon black, graphite, carbon nanotube, and carbon nanosphere. From the viewpoint of the conductivity of an electrode, the average particle diameter of the conducting agent is preferably within the range of equal to or more than 1 nm and less than 1 µm. In the present invention, the average particle diameter of a conducting agent is an average particle diameter measured by a laser diffraction/scattering type particle size distribution analyzer.

When using a conducting agent together, there is no limitation in particular in the mixing ratio of both the materials, it is preferable, from the viewpoint of electrostatic capacity of an electrode film, that the amount of a the conducting agent be adjusted within the range of 1 to 20 parts by weight relative to 100 parts by weight of the active material.

From the viewpoint of increase in the density of an electrode film, an ionic liquid may be added. The addition of an ionic liquid can lead to an expectation of an increase in the ion conductivity of an electric storage device when producing the electric storage device.

It is preferable that the added amount of the ionic liquid in the present invention be adjusted within the range of 0.01 to 2 parts by weight relative to 100 parts by weight of the active material, and it is preferable, from the viewpoint of increasing a density, that it be adjusted within the range of 0.01 to 1.5 parts by weight.

The ionic liquid in the present invention is a salt which is generally a liquid at ordinary temperature. Examples thereof include imidazolium salts, pyridinium salts, pyrrolidinium salts, phosphonium salts, ammonium salts, guanidinium salts, isouronium salts, and isothiouronium salts listed below, and preferably include imidazolium salts.

### (Imidazolium Salts)

1,3-Dimethylimidazolium trifluoromethane sulfonate, 1-ethyl-3-methylimidazolium bis[oxalate(2-)]borate, 1-ethyl-3-methylimidazolium tetrafluoroborate, 1-ethyl-3-methylimidazolium bromide, 1-ethyl-3-methylimidazolium chloride, 1-ethyl-3-methylimidazolium hexafluorophosphate, 1-ethyl-3-methylimidazolium trifluoromethanesulfonate, 1-ethyl-3-methylimidazolium trifluoroacetate, 1-ethyl-3-methylimidazolium methylsulfate, 1-ethyl-3-methylimidazolium p-toluenesulfonate, 1-ethyl-3-methylimidazolium thiocianate, 1-butyl-3-methylimidazolium trifluoromethanesulfonate, 1-butyl-3-methylimidazolium tetrafluoroborate, 1-butyl-3-methylimidazolium hexafluorophosphate, 1-butyl-3-methylimidazolium methylsulfate, 1-butyl-3-methylimidazolium chloride, 1-butyl-3-methylimidazollum bromide, 1-butyl-3-methylimidazolium trifluoroacetate, 1-butyl-3-methylimidazolium octylsulfate, 1-hexyl-3-methylimidazolium bis(trifluoromethylsulfonyl)imide, 1-hexyl-3-methylimidazolium chloride, 1-hexyl-3-methylimidazolium tetrafluoroborate, 1-hexyl-3-methylimidazolium hexafluorophosphate, 1-hexyl-3-methylimidazolium tris(pentafluoroethyl)trifluorophosphate, 3-methyl-1-octylimidazolium hexafluorophosphate, 3-methyl-1-octylimidazolium chloride, 3-methyl-1-octylimidazolium tetrafluoroborate, 3-methyl-1-octylimidazolium bis(trifluoromethylsulfonyl)imide, 3-methyl-1-octylimidazolium octylsulfate, 3-methyl-1-tetradeciimidazolium tetrafluoroborate, 1-hexadecyl-3-methylimidazolium chloride, 3-methyl-1-octadecylimidazolium hexafluorophosphate, 3-methyl-1-octadecylimidazolium bis(trifluoromethylsulfonyl)imide, 3-methyl-1-octadecylimidazolium tri(pentafluoroethyl)trifluorophosphate, 1-ethyl-2,3-dimethylimidazolium bromide, 1-ethyl-2,3-dimethylimidazolium tetrafluoroborate, 1-ethyl-2,3-dimethylimidazolium hexafluorophosphate, 1-ethyl-2,3-dimethylimidazolium chloride, 1-ethyl-2,3-dimethylimidazolium p-toluenesulfonate, 1-butyl-2,3-dimethylimidazolium tetrafluoroborate, 1-butyl-2,3-dimethylimidazolium chloride, 1-butyl-2,3-dimethylimidazolium hexafluorophosphate, 1-butyl-2,3-dimethylimidazolium octylsulfate, 1-hexyl-2,3-dimethylimidazolium chloride, and 1-hexadecyl-2,3-dimethylimidazolium chloride.

### (Pyridinium Salts)

N-Ethylpyridinium chloride, N-ethylpyridinium bromide, N-butylpyridinium chloride, N-butylpyridinium tetrafluoroborate, N-butylpyridinium hexafluorophosphate, N-butylpyridinium trifluoromethanesulfonate, N-hexylpyridinium tetrafluoroborate, N-hexylpyridinium hexafluorophosphate, N-hexylpyridinium bis(trifluoromethylsulfonyl)imide, N-hexylpyridinium trifluoromethanesulfonate, N-octylpyridinium chloride, 4-methyl-N-butylpyridinium chloride, 4-methyl-N-butylpyridinium tetrafluoroborate, 4-methyl-N-butylpyridinium hexafluorophosphate, 3-methyl-N-butylpyridinium chloride, 4-methyl-N-butylpyridinium bromide, 3,4-dimethyl-N-butylpyridinium chloride, and 3,5-dimethyl-N-butylpyridinium chloride.

### (Pyrrolidinium Salts)

1-Butyl-1-methylpyrrolidinium chloride, 1-butyl-1-methylpyrrolidinium trifluoromethanesulfonate, 1-butyl-1-methylpyrrolidinium bis(trifluoromethylsulfonyl)imide, 1-butyl-1-methylpyrrolidinium tetrafluoroborate, 1-butyl-1-methylpyrrolidinium hexafluorophosphate, 1-butyl-1-methylpyrrolidinium tris(pentafluoroethyl)trifluorophosphate, 1-butyl-1-methylpyrrolidinium trifluoroacetate, 1-hexyl-1-methylpyrrolidinium chloride, and 1-methyl-1-octylpyrrolidinium chloride.

### (Phosphonium Salts)

Trihexyl(tetradecyl)phosphonium chloride, trihexyl(tetradecyl)phosphonium tris(pentafluoroethyl)trifluorophosphate, trihexyl(tetradecyl)phosphonium tetrafluoroborate, trihexyl(tetradecyl)phosphonium bis(trifluoromethylsulfonyl)imide, trihexyl(tetradecyl)phosphonium hexafluorophosphate, and trihexyl(tetradecyl)phosphonium bis[oxalate(2-)]borate.

### (Ammonium Salts)

Methyltrioctylammonium trifluoroacetate, methyltrioctylammonium trifluoromethanesulfonate, and methyltrioctylammonium bis(trifluoromethylsulfonyl)imide.

### (Guanidinium Salts)

N"-Ethyl-N,N,N',N'-tetramethylguanidinium tris(pentafluoroethyl)trifluorophosphate, guanidinium tris(pentafluoroethyl)trifluorophosphate, guanidinium trifluoromethanesulfonate, and N"-ethyl-N,N,N',N'-tetramethylguanidinium trifluoromethanesulfonate.

### (Isouronium Salts)

O-Ethyl-N,N,N',N'-tetramethylisouronium trifluoromethanesulfonate, and O-ethyl-N,N,N',N'-tetramethylisouronium tri(pentafluoroethyl)trifluorophosphate.

### (Isothiouronium Salts)

S-Ethyl-N,N,N',N'-tetramethylisothiouronium trifluoromethanesulfonate, and S-ethyl-N,N,N',N'-tetramethylisothiouronium tris(pentafluoroethyl)trifluorophosphate.

The electrode of the present invention comprises a current collector and an electrode film stacked on the current collector, and the electrode film is a film comprising an active material and inorganic particles containing a conductive ion, wherein the active materials are bound with the inorganic particles containing a conductive ion, that is, the above-described electrode film of the present invention. A current collector is usually a foil of metal and examples of the metal include aluminum, copper, and iron. In particular, aluminum is preferable because it is light and low in electric resistance. The current collector is preferably in the form of a film having a thickness within the range of from 20 µm to 100 µm because if so, it is easy to produce a wound electrode or a stacked electrode therefrom. In order to improve the adhesiveness between the current collector and the electrode film, it is preferable that the surface of the current collector have been roughened by etching or the like.

Next, the electrode film and a method for producing the electrode of the present invention are described.

The electrode film of the present invention can be produced by oublicly known methods, such as a sheet forming method in which a mixture of an active material and inorganic particles containing a conductive ion is formed into a sheet by roll molding or press molding, and an applying method in which a dispersion liquid containing the mixture dispersed in a liquid medium (hereinafter referred to as a solvent) to a support to form a dispersion liquid film and then the solvent is removed from the dispersion liquid film to form an electrode film. The use of a current collector as the aforementioned support makes it possible to produce the electrode of the present invention directly.

In the sheet forming method, an active material and inorganic particles containing a conductive ion are first supplied to a mixer at a prescribed rate and mixed, so that a pasty mixture is obtained. At this time, addition of a small amount of solvent can improve the uniformity of the mixture. Next, the pasty mixture is shaped into a sheet form by a molding method, such as roll molding, e.g. calendering, and press forming, so that the electrode film of the present invention can be obtained. Moreover, it is permitted to further extend the electrode film obtained by the above-mentioned method by applying pressure with a roll in order to make the film have a prescribed thickness. The electrode film obtained in this manner is laminated to a current collector, affording the electrode of the present invention. If a solvent remains in the electrode film, the solvent is removed by evaporation.

It is preferred to produce an electrode film by an applying method because an electrode film that is uniform in thickness can be formed easily. Here, the production of the electrode film of the present invention by an applying method is explained in more detail. The applying method is a method in which a dispersion liquid containing an active material and inorganic particles containing a conductive ion dispersed in a solvent is applied to a support (for example, a current collector made of metal foil) to form a dispersion liquid film, and then the solvent is removed from the dispersion liquid film to form an electrode film comprising the active material and the inorganic particles containing a conductive ion. In the applying method, a dispersion liquid in which an active material and inorganic particles containing a conductive ion have been dispersed in a solvent is prepared first.

Examples of a method for the preparation of the dispersion liquid include a method of adding prescribed amounts of an active material and inorganic particles containing a conductive ion to a solvent, and mixing them, a method of adding a solvent to a mixture of prescribed amounts of an active material and inorganic particles containing a conductive ion, and mixing them, a method of adding a prescribed amount of an active material to a conductive ion-containing inorganic particle dispersion liquid in which a prescribed amount of inorganic particles containing a conductive ion has been dispersed in a solvent, and mixing them, a method of mixing a conductive ion-containing inorganic particle dispersion liquid in which a prescribed amount of inorganic particles containing a conductive ion has been dispersed in a solvent, and an active material dispersion liquid in which a prescribed amount of an active material has been dispersed in a solvent, and a method of adding inorganic particles containing a conductive ion to an active material dispersion liquid in which a prescribed amount of an active material has been dispersed in a solvent, and mixing them. A publicly known mixer can be used for each mixing. Moreover, it is also permissible to pulverize an active material and inorganic particles containing a conductive ion in the above-mentioned liquid medium and simultaneously mix the active material and the inorganic particles containing a conductive ion with the liquid medium. In this way, cohesion between the active materials and the inorganic particles containing a conductive ion can be inhibited, so that a dispersion liquid with high dispersibility can be obtained. It is preferable to prepare a dispersion liquid by the method of adding an active material and a solvent to a conductive ion-containing inorganic particle dispersion liquid in which inorganic particles containing a conductive ion have been dispersed in a solvent and then dispersing them because it is easy to disperse the active material and the inorganic particles containing a conductive ion more uniformly. In order to obtain an electrode film having a higher conductivity, it is preferable to use a solution of a silicate which is a compound of a conductive ion and silica, as a conductive ion-containing inorganic particle dispersion liquid, and examples of such a solution include a sodium silicate solution and a lithium silicate solution.

For applying a dispersion liquid on a support to form a dispersion liquid film, publicly known applicators, such as a handy film applicator, a bar coater, and a die coater, can be used. By removing a solvent from the formed dispersion liquid film, an electrode film containing an active material and inorganic particles containing a conductive ion can be formed on the support. As previously described, the electrode of the present invention can be produced directly by using a current collector as the above-mentioned support. The method of removing the solvent may be a method of evaporating the solvent usually at a temperature of 50 to 500°C. When using a lithium silicate solution as a conductive ion-containing inorganic particle dispersion liquid, it is preferable, from the viewpoint of enhancing a binding force, to dry it for 1 to 30 minutes at a temperature of 50 to 80°C first and then further dry it for 1 to 60 minutes at a temperature of 1.00 to 200°C. After forming an electrode film on a support by an applying method, it is permissible to press the electrode film on the support in order to adjust the thickness of the electrode film.

When compressing an electrode film, the pressure is preferably 10 to 500 kg/cm², and more preferably 50 to 300 kg/cm².

The temperature at the time of compressing is preferably equal to or lower than the melting point of the active material and that of the inorganic particles containing a conductive ion. Moreover, from the viewpoint of producing a liquid crosslinking force due to a residual solvent, thereby improving the formability of an electrode film, the temperature at the time of compressing is preferably equal to or lower than the boiling point of the used solvent and, specifically, it is more preferably 10 to 50°C. The compression performed at such a temperature prevents an electrode film from melting and simultaneously allows an active material to be bound firmly. The electrode film produced resulting from compression may be used while being stacked with the support, or it may be used in the form of a single layer after dissolving or peeling the support.

Because the electrode of the present invention is superior in conductivity, it is used suitably for an electric storage device. Specifically, the electrode of the present invention can be used in the form of an electric storage device by arranging two electrodes so that electrode films thereof may be opposed to each other, winding or stacking both the electrode films with a separator interposed between the electrode films, and enclosing the electrodes and the separator together with an electrolyte solution in a metal container.

Examples of the electric storage device referred to herein include a dry battery, a primary battery, a secondary battery, a redox capacitor, and a hybrid capacitor, and the electrode of the present invention is especially preferred as an electrode of a secondary battery.

In particular, an electrode produced by using lithium cobaltate as an active material and lithium silicate as inorganic particles containing a conductive ion is suitable as an electrode of a lithium ion secondary battery.

The present invention is, in one aspect, a secondary battery provided with the above-mentioned electrode of the present invention. Specific examples include a secondary battery in which a separator is between two electrodes and an electrolyte solution is filled between the separator and each electrode, and a secondary battery in which a solid electrolyte (gel electrolyte) is filled between two electrodes.

In a secondary battery, a conductive ion moves from one electrode containing an active material to the other electrode containing an active material during charge, so that a charging current flows. During discharge, a conductive ion moves in the direction opposite to the direction during charge, and thereby a discharging current flows. The conductive ion referred to herein varies between various types of batteries, for example, the ion is lithium ion in a lithium ion secondary battery, and the ion is sodium in a sodium ion secondary battery.

The secondary battery may be a second battery having only one cell containing two electrodes, that is, one pair of a positive electrode and a negative, or alternatively it may be a secondary battery having two or more such cells.

The electrode of the present invention is used suitably for a secondary battery filled with an electrolyte solution. Such a secondary battery is, more specifically, a secondary battery having at least a cell in which two electrodes having a current collector and an electrode film stacked on the current collector are arranged so that the electrode films thereof may be opposed to each other, and a separator is further arranged between the electrode films, an electrolyte solution, and a container in which the at least one cell and the electrolyte are enclosed, wherein each of the above-mentioned electrode films is a film comprising an active material and inorganic particles containing a conductive ion in which the active materials are bound to each other by the inorganic particles containing a conductive ion, that is, the electrode film of the present invention. More specific examples of a secondary battery having the electrode of the present invention include a coin type secondary battery in which a cell in which two disc-like electrodes are arranged so that their electrode films may oppose and a separator is further arranged between the electrode films is enclosed in a coin type case together with an electrolyte solution, a cylindrical secondary battery in which a wound cell in which two sheet-shaped electrodes are arranged so that their electrode films may oppose and a separator is further arranged between the electrode films is enclosed in a cylindrical case together with an electrolyte solution, a stacking type secondary battery in which a film-like electrode and the separator are stacked together, and a bellows-like secondary battery.

A publicly known mixture of an electrolyte and a solvent can be used as the electrolyte solution. The electrolyte may be either an inorganic electrolyte or an organic electrolyte. An inorganic electrolyte is usually formed into an electrolyte solution by mixing with water. An organic electrolyte is usually formed into an electrolyte solution by mixing with a solvent containing an organic polar solvent as a main component.

An insulating film having a great ion permeability and a prescribed mechanical strength is used as the separator. Specific examples include paper made of natural fiber, such as natural cellulose and Manila hemp; paper made of reclaimed fiber or synthetic fiber, such as rayon, vinylon, and polyester; mixed paper made by mixing the natural fiber with the reclaimed fiber or the synthetic fiber; nonwoven fabrics, such as a polyethylene nonwoven fabric, a polypropylene nonwoven fabric, a polyester nonwoven fabric, and a polybuteneterephthala nonwoven fabric; porous films, such as porous polyethylene, porous polypropylene, and porous polyester; and films of resins, such as para wholly aromatic polyamide, and fluorine-containing resins, such as vinylidene fluoride, tetrafluoroethylene, copolymer of vinylidene fluoride and hexafluoropropylene, and fluororubber.

### EXAMPLES

The present invention is described more specifically below by examples, but the invention is not limited by these examples.

### [Example 1]

Lithium cobaltate (Cellseed 10-N produced by Nippon Chemical Industrial Co., Ltd.; average particle diameter = 12 µm) was used as an active material, and DENKA BLACK (DB: 50% press; produced by Denki Kagaku Kogyo Kabushiki Kaisha; average particle diameter = 32 nm) was used as a conducting agent. Lithium silicate (lithium silicate 35: produced by Nissan Chemical Industries, Ltd., solid concentration of aqueous solution = 23 wt%, average particle diameter = 1.3 µm) was used as inorganic particles containing a conductive ion.

A slurry having a solid concentration of 50% by weight was prepared by adding 10.4 g of lithium silicate to 36.0 g of lithium cobaltate and 2.8 g of DENKA BLACK, and further adding pure water, followed by mixing them. The slurry contained 36.0 g of lithium cobaltate, 2.8 g of DENKA BLACK, and 2.4 g of lithium silicate. That is, the amount of the inorganic particles containing a conductive ion per 100 parts by weight of the active material was 6.6 parts by weight. The slurry was applied to a 20 µm-thick aluminum foil (a current collector) with a handy film applicator, thereby forming a slurry film, which was then held at room temperature for 30 minutes. The resultant was then heated at 60°C for 60 minutes and further heated at 150°C for 6 hours, thereby removing water, so that an electrode in which an electrode film had been stacked on the current collector was obtained. The thickness of the electrode film after drying was 71 µm.

From the resulting electrode was cut one electrode having a size of 3.0 cm by 3.0 cm, and then the weight, the thickness, and the surface resistance of the electrode film were measured. For the measurement of the surface resistance was used a LORESTA (manufactured by the DIA INSTRUMENTS Co, Ltd.). The density calculated from the weight and the film thickness, and the measurement of the surface resistance were shown in Table 1.

### [Example 2]

A slurry having a solid concentration of 44% by weight was prepared in the same manner as in Example 1 except for using 8.4 g of potassium silicate (produced by Wako Pure Chemical Industries, Ltd., solid concentration of aqueous solution = 28 wt%, average particle diameter = 0.7 µm) instead of lithium silicate as inorganic particles containing a conductive ion. The slurry contained 36.0 g of lithium cobaltate, 2.8 g of DENKA BLACK, and 2.4 g of potassium silicate. That is, the amount of the inorganic particles containing a conductive ion per 100 parts by weight of the active material was 6.6 parts by weight. Next, an electrode was produced as in Example 1. The thickness of the electrode film after drying was 28 µm.

From the resulting electrode was cut one electrode having a size of 3.0 cm by 3.0 cm, and then the weight, the thickness, and the surface resistance of the electrode film were measured. For the measurement of the surface resistance was used a LORESTA (manufactured by the DIA INSTRUMENTS Co., Ltd.). The density calculated from the weight and the film thickness, and the measurement of the surface resistance were shown in Table 1.

### [Example 3]

A slurry of having a solid concentration of 44% by weight was prepared in the same manner as in Example 1 except for using 4.4 g of sodium silicate (produced by Wako Pure Chemical Industries, Ltd., solid concentration of aqueous solution = 55 wt%) instead of lithium silicate as inorganic particles containing a conductive ion. The slurry contained 36.0 g of lithium cobaltate, 2.8 g of DENKA BLACK, and 2.4 g of sodium silicate. That is, the amount of the inorganic particles containing a conductive ion per 100 parts by weight of the active material was 6.6 parts by weight. Next, the electrode was produced as in Example 1. The thickness of the electrode film after drying was 49 µm.

From the resulting electrode was cut one electrode having a size of 3.0 cm by 3.0 cm, and then the weight, the thickness, and the surface resistance of the electrode film were measured. For the measurement of the surface resistance was used a LORESTA (manufactured by the DIA INSTRUMENTS Co., Ltd.). The density calculated from the weight and the film thickness, and the measurement of the surface resistance were shown in Table 1.

### [Example 4]

Lithium cobaltate (produced by STREM CHEMICALS, Inc.; average particle diameter = 6 µm) was used as an active material, and DENKA BLACK (DB: 50% press, produced by Denki Kagaku Kogyo Kabushiki Kaisha; average particle diameter = 32 nm) was used as a conducting agent. Lithium silicate (lithium silicate 35: produced by Nissan Chemical Industries, Ltd., average particle diameter of 1.3 µm) was used as inorganic particles containing a conductive ion. Furthermore, 1-ethyl-3-methylimidazolium tetrafluoroborate (Merck, Ltd.) was added as an ionic liquid.

A slurry having a solid concentration of 44% by weight was prepared by adding 0.01 g of the ionic liquid to 9.0 g of lithium cobaltate, 0.7 g of DENKA BLACK, and 2.61 g of lithium silicate and further adding pure water, followed by mixing them. The slurry contained 9.0 g of lithium cobaltate, 0.7 g of DENKA BLACK, 0.6 g of lithium silicate, and 0.1 g of the ionic liquid. That is, the amount of the ionic liquid per 100 parts by weight of the active material was 1.1 parts by weight. The slurry was applied to a 20 µm-thick aluminum foil (a current collector) with a handy film applicator, thereby forming a slurry film, which was then held at room temperature for 30 minutes. The resultant was then heated at 60°C for 60 minutes and further heated at 150°C for 6 hours, thereby removing water, so that an electrode in which an electrode film had been stacked on the current collector was obtained. The thickness of the electrode film after drying was 36.7 µm.

From the resulting electrode was cut one electrode having a size of 3.0 cm by 3.0 cm, and then the weight, the thickness, and the surface resistance of the electrode film were measured. For the measurement of the surface resistance was used a LORESTA (manufactured by the DIA INSTRUMENTS Co., Ltd.). The density calculated from the weight and the film thickness, and the measurement of the surface resistance were shown in Table 1.

### [Comparative Example 1]

Lithium cobaltate (produced by STREM CHEMICALS, Inc; average particle diameter = 6 µm) was used as an active material, DENKA BLACK (DB: 50% press, produced by Denki Kagaku Kogyo Kabushiki Kaisha) and artificial graphite (KS15 produced by Lonza) were used as conducting agents. A fluororesin (PVdF (trade name) produced by Sigma-Aldrich Corporation) was used instead of the inorganic particles containing a conductive ion, and N-methylpyrrolidone (NMP) was used instead of the pure water. A slurry having a solid concentration of 57% by weight was prepared by adding 0.3 g of the fluororesin to 9.0 g of lithium cobaltate, 0.1 g of DENKA BLACK, and 0.6 g of artificial graphite, and further adding pure water, followed by mixing them. The slurry contained 9.0 g of the active material, 0.1 g of DENKA BLACK, 0.6 g of artificial graphite, and 0.3 g of PVdF. That is, the amount of the fluororesin per 100 parts by weight of the active material was 3.3 parts by weight. Next, the electrode was produced as in Example 1. The thickness of the electrode film after drying was 72 µm.

From the resulting electrode was cut one electrode having a size of 3.0 cm by 3.0 cm, and then the thickness and the surface resistance of the electrode film were measured. The density calculated from the weight and the film thickness, and the measurement of the surface resistance were shown in Table 1.

### [Comparative Example 2]

A slurry having a solid concentration of 57% by weight was prepared in the same manner as in Comparative Examples 1 except for using 3.0 g of colloidal silica (Snowtex PS-S (trade name) produced by Nissan Chemical Industries, Ltd.; average particle diameter = 10 to 50 nm; chained particles in which spherical silica had been linked in a length of 50 to 200 nm; solid concentration: 20% by weight) as inorganic particles instead of the fluororesin and pure water instead of NMP. The slurry contained 9.0 g of the active material, 0.1 g of DENKA BLACK, 0.6 g of artificial graphite, and 0.6 g of silica. That is, the amount of the inorganic particles per 100 parts by weight of the active material was 6.6 parts by weight. Next, the electrode was produced as in Example 1. The thickness of the electrode film after drying was 41 µm.

From the resulting electrode was cut one electrode having a size of 3.0 cm by 3.0 cm, and then the weight, the thickness, and the surface resistance of the electrode film were measured. The density calculated from the weight and the film thickness, and the measurement of the surface resistance were shown in Table 1.

### [Comparative Example 3]

A slurry having a solid concentration of 44% by weight was prepared in the same manner as in Example 1 except for using lithium cobaltate (produced by STREM CHMICALS, Inc: average particle diameter = 6 µm) as an active material, and 12.0 g of colloidal silica (Snowtex PS-S (trade name) produced by Nissan Chemical Industries, Ltd.; average particle diameter = 10 to 50 nm; chained particles in which spherical silica had been linked in a length of 50 to 200 nm; solid concentration: 20% by weight) as inorganic particles instead of the inorganic particles containing a conductive ion. The slurry contained 36.0 g of the active material, 2.8 g of DENKA BLACK, 2.4 g of silica. That is, the amount of the inorganic particles per 100 parts by weight of the active material was 6.6 parts by weight. Next, the electrode was produced as in Example 1. The thickness of the electrode film after drying was 28 µm.

From the resulting electrode was cut one electrode having a size of 3.0 cm by 3.0 cm, and then the weight, the thickness, and the surface resistance of the electrode film were measured. The density calculated from the weight and the film thickness, and the measurement of the surface resistance were shown in Table 1.

### [Comparative Example 4]

A slurry having a solid concentration of 44% by weight was prepared in the same manner as in Example 1 except for using 12.0 g of colloidal silica (Snowtex PS-S (trade name) produced by Nissan Chemical Industries, Ltd.; average particle diameter = 10 to 50 nm; chained particles in which spherical silica had been linked in a length of 50 to 200 nm; solid concentration: 20% by weight) as inorganic particles instead of the inorganic particles containing a conductive ion. The slurry contained 36.0 g of the active material, 2.8 g of DENKA BLACK, 2.4 g of silica. That is, the amount of the inorganic particles per 100 parts by weight of the active material was 6.6 parts by weight. Next, the electrode was produced as in Example 1. The thickness of the electrode film after drying was 36 µm.

From the resulting electrode was cut one electrode having a size of 3.0 cm by 3.0 cm, and then the weight, the thickness, and the surface resistance of the electrode film were measured. The density calculated from the weight and the film thickness, and the measurement of the surface resistance were shown in Table 1.

**[Table 1]**

| | Positive electrode material | Conducting agent | Binder | Ionic liquid | Surface resistance[Ω/□] |
|---|---|---|---|---|---|
| Example 1 | Lithium cobaltate | DB | Lithium silicate | Absent | 4.45E+0 |
| Example 2 | lithium cobaltate | DB | Potassium silicate | Absent | 8.50E+0 |
| Example 3 | Lithium cobaltate | DB | Sodium silicate | Absent | 5.55E+0 |
| Example 4 | Lithium cobaltate | DB | Lithium silicate | Present | 3.97E+0 |
| Comparative Example 1 | Lithium cobaltate | DB+KS15 | PVdF | Absent | 5.41E+2 |
| Comparative Example 2 | Lithium cobaltate | DB+KS15 | Silica | Absent | 3.69E+1 |
| Comparative Example 3 | Lithium cobaltate | DB | Silica | Absent | 1.25E+1 |
| Comparative Example 4 | Lithium cobaltate | DB | Silica | Absent | 2.36E+1 |

### INDUSTRIAL APPLICABILITY

In accordance with the present invention a highly conductive electrode films, and an electrode and an electric storage device each using the same can be obtained. This electric storage device is a so-called redox electric storage device, and it can be used suitably for a memory backup power supply of a laptop PC and a cellular phone, and the like, an auxiliary power supply of OA equipment, a power supply and an auxiliary power supply of an electric vehicle, a hybrid car, a fuel-cell vehicle, and so on.

## Claims

1. An electrode film comprising an active material having an average particle diameter being equal to or more than 2 µm and equal to or less than 50 µm and inorganic particles containing a conductive ion and having an average diameter being equal to or more than 1 nm and less than 2 µm, wherein the active material is bound by the inorganic particles containing a conductive ion.

2. The electrode film according to claim 1, wherein the content of the inorganic particles containing a conductive ion is equal to or more than 1 part by weight and equal to or less than 50 parts by weight relative to 100 parts by weight of the active material.

3. The electrode film according to claim 1 or 2, wherein the electrode film further comprises an ionic liquid.

4. The electrode film according to any one of claims 1 to 3, wherein the electrode film has been compressed at a temperature that is equal to or less than the melting point of the active material and is equal to or less than the melting point of the inorganic particles containing a conductive ion.

5. The electrode film according to any one of claims 1 to 4, wherein the inorganic particles containing a conductive ion are lithium silicate.

6. An electrode in which electrode film according to any one of claims 1 to 5 has been laminated on a current collector.

7. A method for producing the electrode according to claim 6, wherein the method comprises: applying a dispersion liquid comprising an active material and inorganic particles containing a conductive ion dispersed in a liquid medium to a current collector to form a dispersion liquid film, and removing the liquid medium from the dispersion liquid film to form an electrode film.

8. The method for producing an electrode according to claim 7, wherein the dispersion liquid is a dispersion liquid prepared by mixing an active material and inorganic particles containing a conductive ion with a liquid medium while pulverizing the active material and the inorganic particles containing a conductive ion in the liquid medium.

9. The method for producing an electrode according to claim 7, wherein the dispersion liquid is a dispersion liquid prepared by adding an active material to a conductive ion-containing inorganic particle dispersion liquid comprising inorganic particles containing a conductive ion dispersed in a liquid medium, followed by mixing.

10. The method for producing an electrode according to claim 9, wherein the conductive ion-containing inorganic particle dispersion liquid is a solution comprising lithium silicate.

11. An electric storage device comprising the electrode according to claim 6, in which two electrodes are arranged so that electrode films thereof may be opposed to each other, both the electrode films are wound or stacked with a separator interposed between the electrode films, and the electrodes and the separator are enclosed together with an electrolyte solution in a metal container.
